# EUROPÄISCHE PATENTANMELDUNG

(11) **EP 3 424 775 A2**
(43) Veröffentlichungstag der Anmeldung: **09.01.2019**
(21) Anmeldenummer: 18181780.0
(22) Anmeldetag: 04.07.2018
(51) Int. Cl.: B60P 1/16, B60P 1/28, B65D 88/12, B65D 88/56

(54) **KIPPVORRICHTUNG UND TRANSPORTSYSTEM MIT EINER KIPPVORRICHTUNG**

(30) Priorität: 04.07.2017 CH 8662017
(71) Anmelder: Ludwig Elkuch AG, 9487 Bendern (LI)
(72) Erfinder: Elkuch, Nicolas, 9487 Bendern (LI); Binder, Robert, 3351 Weistrach (AT)
(74) Vertreter: Riederer Hasler & Partner Patentanwälte AG

(57) **Zusammenfassung**

Eine Kippvorrichtung (11) für Transportcontainer (71) besitzt einen unteren Grundrahmen (13) und einem Kippelement (15), das gelenkig mit dem Grundrahmen verbunden (13) ist. Am Grundrahmen (13) ist eine Hebevorrichtung (41) vorgesehen, die am Kippelement (15) angreift und ein Verschwenken des Kippelements gegenüber dem Grundrahmen bewirken kann. Am Grundrahmen sind Eckbeschläge (23) einer ersten Art vorgesehen, die mit Eckbeschlägen einer zweiten Art zusammenwirken können, die an einem Transportfahrzeug vorgesehen sind. Am Kipprahmen (15) sind Eckbeschläge (53) einer zweiten Art vorgesehen zum formschlüssigen Zusammenwirken mit den an einem Transportcontainer vorgesehenen Eckbeschlägen (23) einer ersten Art. Erfindungsgemäss ist die die Hydraulikvorrichtung mit dem vorzugsweise teleskopartig ausfahrbaren Kolben in der Ruheposition innerhalb der Auflagefläche des Grundrahmens angeordnet ist. Dadurch kann die Kippvorrichtung auch auf Bahnwagen verwendet werden.

## Beschreibung

### Gebiet der Erfindung

Die Erfindung betrifft eine Kippvorrichtung, die zum seitlichen Kippen von Transportcontainern und zur Verwendung im kombinierten Ladungsverkehr auf Last- und Bahnwagen ausgelegt ist, gemäss Oberbegriff von Anspruch 1, sowie ein Transportsystem mit einer Kippvorrichtung gemäss Oberbegriff von Anspruch 15.

### Stand der Technik

Im Transportwesen werden heutzutage genormte Container eingesetzt, um Güter zu Land und auf Wasser zu transportieren. Die genormten Container haben den Vorteil, dass diese auf Lastwagen, Schiffen oder Eisenbahnwagen transportiert werden können, ohne dass das Transportgut umgeladen werden müsste. ISO-Container sind genormte Großraumbehälter aus Stahl, die ein einfaches und schnelles Verladen, Befördern, Lagern und Entladen von Gütern ermöglichen. Sie sind entweder 20 Fuss (6,096 m) oder 40 Fuß (12,192 m) lang und 8 Fuss (2,4384m) breit. Die Container sind so stabil gebaut, sodass sie in mehreren Lagen übereinander gestapelt werden können.

Genormte Container werden auch für den Transport von Schüttgut, Aushubmaterial etc. verwendet. In der Schweiz gibt es neuerdings Vorschriften, die verlangen, dass für den Transport von mehr als 25'000 m3 Material die im Vergleich zu Lastwagen umweltfreundlichere Eisenbahn verwendet werden muss. Dies führt dazu, dass das zu transportierende Material mehrfach umgeladen werden muss, wenn der Ausgangsort des Materials über keinen Gleisanschluss verfügt.

Die für den Transport von Aushubmaterial verwendeten Container sind üblicherweise oben offen. Zum Entladen wird die stirnseitig vorgesehene Türe geöffnet und der Container gekippt, indem der Container durch einen Kran einseitig angehoben wird. Um den Entladevorgang zu beschleunigen wurden schon spezielle Container hergestellt, die mit einer Kippvorrichtung ausgestattet sind, d.h. wo die Kippvorrichtung integral mit dem Container ist. Dies hat allerdings den Nachteil, dass der Container nochmals bedeutend schwerer wird und mit entsprechend weniger Material beladen werden kann, wenn der Container auf einem Lastwagen transportiert werden muss.

EP 2 848 466 offenbart eine zweiteilige, freistehende Kippvorrichtung bestehend aus einer ersten Vorrichtung, um Standardcontainer frontseitig zu entleeren und einer zweiten Vorrichtung, um Container seitlich zu entleeren. Zur frontseitigen Entleerung von Containern ist nur die erste Vorrichtung nötig. Diese hat an den gegenüberliegenden Enden Querträger mit Füssen, die in der Höhe verstellbar sind, um Bodenunebenheiten auszugleichen. Wenn ein Behälter seitlich entleert werden soll, wird die zweite Vorrichtung auf der ersten Vorrichtung angeordnet und die beiden Hydraulikzylinder der zweiten Vorrichtung werden an die Hydraulikinstallation der Basisvorrichtung angeschlossen. Die zweite Vorrichtung ist ausgelegt, um lediglich auf eine einzige Seite gekippt zu werden. Sie besteht aus einem Basiselement, auf dem ein rechteckiges bewegliches Teil um eine seitliche Drehachse verschwenkbar angeordnet ist. Die Hydraulikzylinder erstrecken sich quer zur Längserstreckung des Basiselements, wobei das Gegenlager des Hydraulikzylinders auf der einen Seite des Basiselements angeordnet ist und der Kolben gegenüberliegend seitlich am beweglichen Teil, d.h. bei ungefähr einem Drittel der Quererstreckung des beweglichen Teils angreift.

US Patent Nr. 5,836,657 zeigt eine Kippvorrichtung zur Anordnung auf Container-Transportfahrzeugen. Die Kippvorrichtung besteht aus einem unteren Rahmen und einem oberen Rahmen, der verschwenkbar am hinteren Ende des unteren Rahmens angeordnet ist. Die Kippvorrichtung hat zwei Zylinder/Kolbenaggregate, die senkrecht und im Abstand voneinander seitlich der Längsmittellinie der Kippvorrichtung angeordnet sind. Diese Anordnung hat den Vorteil, dass die Zylinder/Kolbenaggregate fix am Grundrahmen angeordnet werden können und vom ersten Moment an die maximale Kraft auf den Kipprahmen übertragen können. In Längsrichtung gesehen sind die Zylinder/Kolbenaggregate ungefähr im vorderen Drittel der Kippvorrichtung angeordnet, sodass zum Entleeren eines Containers der bewegliche Kipprahmen vorne angehoben werden kann und die Entleerung stirnseitig hinten erfolgt. Die Kippvorrichtung ist ausschliesslich für die Verwendung auf Lastwagenanhängern ausgelegt. Dies erkennt man daran, dass die Entleerung nur nach hinten möglich ist und die Zylinder/Kolbenaggregate die Auflageebene des Grundrahmens nach unten überragen.

### Aufgabe der Erfindung

Es ist deshalb ein Ziel der vorliegenden Erfindung, eine Vorrichtung bereitzustellen, mit der Standard-Transportcontainer rasch geleert werden können, mit der die Transportcontainer seitlich entleert werden können. Ein weiteres Ziel ist es, eine Vorrichtung vorzuschlagen, die eine hohe Flexibilität ermöglicht, was die Entleerung und die Verwendung auf unterschiedlichen Transportmitteln, wie Lastwagen und inbesondere Eisenbahn angeht. Auch ist es ein Ziel, dass unterschiedliche Typen von Standardcontainern, insbesondere solche, die an der Unterseite keinen Hohlraum aufweisen, entleert werden können. Noch ein Ziel ist es, ein Transportsystem vorzuschlagen, das insbesondere den Transport von Schüttgut, wie Aushubmaterial, Kies, SandSchlacke, Asche und dergleichen, per Eisenbahn und Lastwagen ausgelegt ist.

### Beschreibung der Erfindung

Die Erfindung betrifft eine Kippvorrichtung, die zum seitlichen Entleeren von Transportcontainern ausgelegt ist, insbesondere vonnormierten, stapelbaren Transportcontainer, wie z.B. die einen einleitend beschriebenen ISO-Container.

Die Kippvorrichtung besitzt
- einen unteren Grundrahmen,
- ein verschwenkbares Kippelement, das auf dem Grundrahmen angeordnet und gelenkig mit diesem verbunden ist,
- eine am Grundrahmen angeordnete Hebevorrichtung, die am Kippelement angreift und ein Verschwenken des Kippelements gegenüber dem Grundrahmen bewirken kann, und- vorzugsweise am Grundrahmen vorgesehenen Eckbeschläge einer ersten Art, die mit Eckbeschlägen einer zweiten Art zusammenwirken können, die an einem Transportfahrzeug vorgesehen sind,
- und vorzugsweise am Kippelement vorgesehenen Eckbeschläge einer zweiten Art zum formschlüssigen Zusammenwirken mit den an einem Transportcontainer vorgesehenen Eckbeschlägen einer ersten Art.

Die erfindungsgemässe Kippvorrichtung ist weiter dadurch charakterisiert, dass am Grundrahmen zusätzlich eine Antriebseinheit für die Hebevorrichtung vorgesehen ist und die Hebevorrichtung mit dem vorzugsweise teleskopartig ausfahrbaren Kolben in der Ruheposition innerhalb der Auflagefläche des Grundrahmens angeordnet ist. Dadurch, dass eine Antriebseinheit direkt am Grundrahmem vorgesehen ist und die Hebevorrichtung innerhalb der Auflagefläche angeordnet ist, kann die erfindungsgemässe Kippvorrichtung auch auf Bahnwagen eingesetzt werden, dies im Unterschied zum eingangs zitierten US Patent Nr. 5,836,657. Die Kippvorrichtung hat den Vorteil, dass sie auf bestehenden Fahrzeugen, insbesondere Bahnwagen, die für den Transport der entsprechenden Container ausgelegt sind, angeordnet werden kann und damit den Bahnwagen mit einer zusätzlichen Kippfunktion ausstattet. Diese mit einer Kippvorrichtung ausgestatteten Bahnwagen können dann einen Transportcontainer ohne Zuhilfenahme eines Krans entleeren, weil diese den Container mit Hilfe der vorzugsweise autonomen Kippvorrichtung in eine Schrägstellung bringen können.

Die für die Betätigung der Hebevorrichtung vorgesehene Antriebseinheit kann eine am Grundrahmen angeordnete Hydraulikpumpe und ein dem Antrieb der Hydraulikpumpe dienender Motor, insbesondere Elektromotor, sein. Damit eignet sich die Kippvorrichtung für die Verwendung auf Eisenbahnwagen, die dem Transport von Containern, insbesondere ISO-Containern, dienen. Zur Betätigung der Kippvorrichtung muss der Elektromotor lediglich an eine Stromquelle angeschlossen werden und kann dann betätigt werden.

Stapelbare, normierte Container besitzen bodenseitig Eckbeschläge einer ersten Art und deckenseitig Eckbeschläge einer zweiten Art, wobei die Eckbeschläge der ersten und zweiten Art zweier Transportcontainer formschlüssig miteinander zusammenwirken können, um diese übereinander stapeln zu können. Vorteilhaft ist die die Kippvorrichtung für die Aufnahme von Transportcontainern, vorzugsweise von ISO-Containern, ausgelegt ist, die bodenseitig Eckbeschläge der ersten Art und deckenseitig Eckbeschläge der zweiten Art aufweisen, wobei die Eckbeschläge der ersten und zweiten Art zweier Transportcontainer formschlüssig miteinander zusammenwirken können, um die Container übereinander stapeln zu können.

Vorteilhaft sind am Grundrahmen mehrere Auflager und am Kippelement mehrere mit den Auflagern zusammenwirkende Auflagerfüsse vorgesehen. Zweckmässigerweise sind die Auflager und Auflagerfüsse in den Ecken des Grund- resp. Kipprahmens vorgesehen. Eine Vierpunktauflage sorgt im Regelfall für eine ausreichende Abstützung des Kippelements, obwohl grundsätzlich eine Abstützung über einen grösseren Bereich stattfinden kann.

Vorteilhaft ist für jedes Auflager je eine Verriegelungsvorrichtung vorgesehen, die ausgelegt ist, um den auf dem Auflager aufliegenden Auflagerfuss des Kippelements in der eingenommenen Stellung zu blockieren. Dadurch ist das Kippelement sicher am Grundrahmen festgelegt. Zum Kippen müssen dann - analog zu einem Autoanhänger mit kippbarer Ladebrücke - die Verriegelungsvorrichtungen entlang einer Containerseite gelöst werden, um diese Seite dann mittels der Hebevorrichtung anheben zu können.

Zweckmässigerweise hat das Auflager eine nach oben offene U-förmige Ausnehmung für die Aufnahme des Auflagerfusses. Eine solches Auflager kann kostengünstig hergestellt werden. Wenn der Auflagerfuss durch eine Kippwelle gebildet ist, kann diese in der U-förmigen Ausnehmung des Auflagers aufgenommen sein.

In einer Ausführungsform umfasst die Verriegelungsvorrichtung ein Kolben/Zylinderaggregat, das an einem Pfosten angeordnet ist und dessen Kolben in Öffnungen, die in den Schenkeln der U-förmigen Ausnehmung vorgesehen sind, eingreifen kann. Damit ist die Kippwelle sicher am Auflager fixiert.

Als Hebevorrichtung kommt vorzugsweise eine Hydraulikvorrichtung mit einem teleskopartig ausfahrbaren Kolben zum Einsatz. Solche hydraulischen Hebevorrichtungen können sehr grosse Lasten anheben.

Zweckmässigerweise umfasst die Hebevorrichtung neben der aus dem Zylinder/Kolbenaggregat bestehenden Hydraulikvorrichtung eine Hydraulikpumpe. Die Hydraulikpumpe ist über eine entsprechende Zahl von Druckleitungen mit den Kolben-/Zylinderaggregaten der Verriegelungsvorrichtungen und der Hebevorrichtungverbunden. Denkbar ist jedoch auch, dass die Hebevorrichtung direkt an die Hydraulikeinrichtung des Fahrzeugs, insbesondere Lastwagen, angeschlossen ist.

Gemäss einer bevorzugten Ausführungsform ist der Grundrahmen durch zwei Längs- und zwei Querträger gebildet. Auf den Querträgern des Grundrahmens kann dann je eine Hebevorrichtung angeordnet sein.

Gemäss einer bevorzugten Ausführungsform sind die Hydraulikvorrichtung mit der Hydraulikpumpe und der Motor für den Betrieb der Hydraulikvorrichtung innerhalb der Aussenflächen der Kippvorrichtung angeordnet. Das heisst, dass weder die Hydraulikpumpe, Hydraulikpumpe und Motor weder nach unten über die Auflagefläche noch nach oben über gegenüberliegende Deckenfläche hinausragt. Dies hat den Vorteil, dass auch Container gekippt werden können, die an der Unterseite keinen oder nur einen kleinen Hohlraum haben.

Vorteilhaft ist die Hydraulikvorrichtung gelenkig an der Kippvorrichtung gelagert. So ist einerseits der Zylinder der Hebevorrichtung um eine Drehachse verschwenkbar gelagert und der Kolben der Hebevorrichtung ist gelenkig mit dem Kippelement verbunden. In der Ausgangsposition ist der Kolben des Zylinder/Kolbenaggregats der Hydraulikvorrichtung im Wesentlichen senkrecht zur Fläche des Grundrahmens angeordnet. Dieser verschwenkt sich dann beim Kippvorgang auf die eine oder die andere Seite.

Vorteilhaft umfasst die Hebevorrichtung zusätzlich eine Steuerung, mit Hilfe derer die entsprechenden Ventile zur Betätigung der Hydraulik- und der Verriegelungsvorrichtungen angesteuert werden können.

Gegenstand der vorliegenden Erfindung ist auch ein Transportsystem mit einem-Transportcontainer für den Transport von Schüttgut wie Aushubmaterial, Kies, SandSchlacke, Asche und dergleichen, mit einem Bodenteil und vier Wänden, nämlich zwei Seitenwänden und zwei Stirnwänden, wobei mindestens eine der Seitenwände als Türe ausgebildet ist. Der Transportcontainer ist weiter dadurch gekennzeichnet, dass eine Seitenwand als eine um eine Schwenkachse verschwenkbare Klapptüre ausgebildet ist, die an den Ecken gegenüberliegend der Schwenkachse mittels mindestens einer ersten, vorzugsweise maschinell betätigbaren Verriegelungsvorrichtung in der Geschlossenstellung blockierbar ist. Dieser Transportcontainer lässt sich entleeren, indem dieser um eine in Längsrichtung des Containers verlaufende Schwenkachse verschwenkt und in eine Schrägstellung gebracht wird, wodurch sich die entriegelte Klapptüre aufgrund der wirkenden Schwerkraft selbsttätig öffnet.

Vorteilhaft sind beide gegenüberliegenden Seitenwände als verschwenkbare Klappen resp. Klapptüren ausgebildet, sodass der Container auf beide Seiten hin entleert werden kann.

Gemäss einer bevorzugten Ausführungsform ist mindestens eine Stirnwand zusätzlich als verschwenkbare Klappe ausgebildet, d.h. neben den langen Seitenwänden ist vorzugsweise auch die Heckseite als verschwenkbare Heckklappe ausgebildet.

Die am Container vorgesehenen Klappen - seien es eine, zwei oder drei - sind jeweils um eine oben am Container verlaufende Schwenkachse verschwenkbar. Wird der Container um eine parallele, am Boden des Containers verlaufende Schwenkachse gekippt, dann öffnen sich die Klappen selbsttätig durch die wirkende Schwerkraft.

Damit zumindest die seitlichen Klappen nicht unbeabsichtigt geöffnet werden können, sind an den Ecken gegenüberliegend der Schwenkasche je eine zweite Verriegelungsvorrichtung vorgesehen ist, die mit der ersten Verriegelungsvorrichtung zusammenwirkt. Dabei kann die zweite Verriegelungsvorrichtung ein Betätigen der ersten Verriegelungsvorrichtung verhindern, indem diese auf einen beweglichen Teil der ersten Verriegelungsvorrichtung einwirkt.

Vorteilhaft sind die ersten und die zweiten Verriegelungsvorrichtungen in einem Winkel zueinander angeordnet. Dies ist eine einfache und kostengünstige Konstruktion, mit der sich die unbeabsichtigte Betätigung der ersten Verriegelungsvorrichtung verhindern lässt.

Gegenstand der vorliegenden Erfindung ist auch ein einTransportcontainer für den Transport von Schüttgut wie Aushubmaterial, Kies, SandSchlacke, Asche und dergleichen gemäss Anspruch 15.

Ausführungsbeispiele der Erfindung werden unter Bezugnahme auf die nachfolgenden Figuren näher im Detail beschrieben. Es zeigt:
- Figur 1: Eine Seitenansicht (oben) und eine Stirnansicht (unten) einer erfindungsgemässe Kippvorrichtung bestehend aus einem Grundrahmen und einem auf dem Grundrahmen angeordneten Kipprahmen in der Ruheposition;
- Figur 2:: Den Kipprahmen von Fig. 1 in Draufsicht, Seitenansicht und Stirnansicht;
- Figur 3:: Den Grundrahmen von Fig. 1 in Draufsicht, Seitenansicht und Stirnansicht;
- Figur 4:: Die Kippvorrichtung von Fig. 1 mit dem Kipprahmen in der Arbeitsposition;
- Figur 5:: Einen für die Kippvorrichtung angepassten Transportcontainer ohne Deckenteil in der Seitenansicht;
- Figur 6:: Den Transportcontainer von Fig. 5 in der Stirnansicht, wobei auf der linken Seite die Verriegelungsvorrichtung in der Offenstellung, und auf der rechten Seite in der Schliessstellung gezeigt ist;
- Figur 7:: Ein auf der Kippvorrichtung angeordneter Transportcontainer in der Seitenansicht, wobei nur ein unterer Abschnitt des Transportcontainers gezeigt ist;
- Figur 8:: Die Kippvorrichtung und der Transportcontainer in der Arbeitsposition.

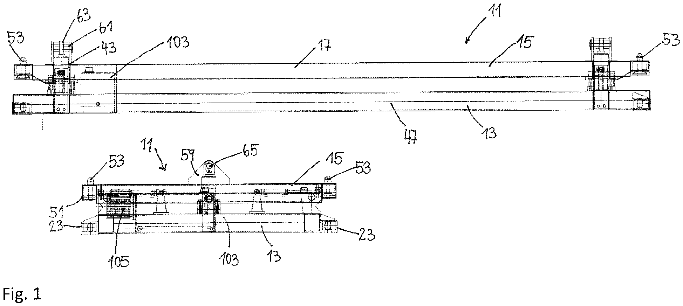

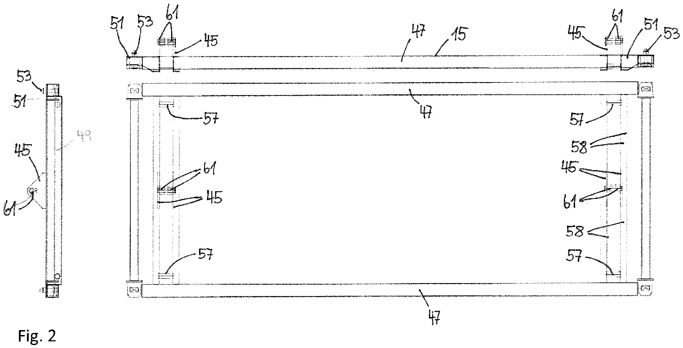

Die in den Figuren 1 bis 4 gezeigte Kippvorrichtung 11 umfasst einen unteren Grundrahmen 13 und einen auf dem Grundrahmen 13 angeordnetes Kippelement, das vorliegend als Kipprahmen 15 ausgebildet ist, der gegenüber dem Grundrahmen verschwenkbar ist, um einen auf dem Kipprahmen angeordneten Transportcontainer zu entleeren. Der Kipprahmen 15 kann dabei wahlweise auf die eine oder die andere Seite gekippt werden. Die Kippvorrichtung 11 ist dazu bestimmt, um auf einem herkömmlichen, für den Transport von genormten Transportcontainern ausgelegten Eisenbahn- oder Lastwagen angeordnet zu werden, um den Entladevorgang zu beschleunigen. Ein wesentlicher Vorteil der Kippvorrichtung ist, dass herkömmliche Eisenbahnwagen mit einer Zusatzfunktion, nämlich einer Kippfunktion, ausgestattet werden können, die ansonsten nur die bekannten Drehschieber-Seitenentladewagen besitzen.

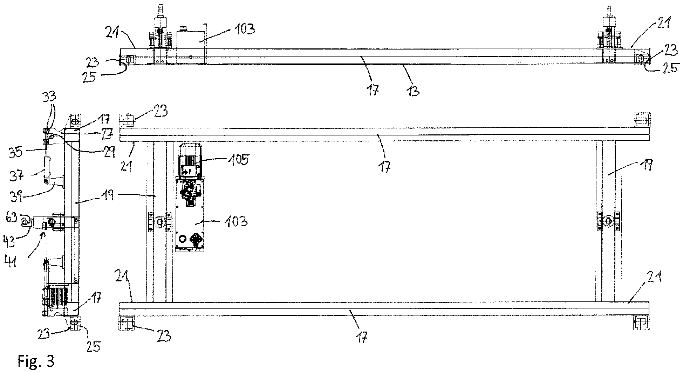

Der rechteckförmige Grundrahmen 13 der Kippvorrichtung besteht aus je zwei Längsträgern 17 und zwei mit diesen verbunden Querträgern 19 (Fig. 3). Der Grundrahmen 13 hat an allen vier Ecken Auskragungen 21, an denen je ein Gehäuse 23 für die Aufnahme eines Verbindungsteils vorgesehen ist. Das Gehäuse 23 besitzt eine senkrechte Öffnung 25, in die ein Verbindungszapfen eingreifen kann. Die Abstände zwischen den Gehäusen 23 entsprechen vorzugsweise denjenigen von genormten ISO-Containern (siehe oben). Damit kann der Grundrahmen 13 wie ein ISO-Container bei Bedarf wahlweise auf einem Eisenbahn- oder Lastwagen angeordnet werden.

An den vier Ecken des Grundrahmens 13 sind Auflager 27 mit einer U-förmigen Ausnehmung 29 vorgesehen, wobei die Öffnung der U-förmigen Ausnehmung 29 senkrecht nach oben orientiert ist. Grundsätzlich würden bei einer lediglich auf eine Seite kippbaren Kippvorrichtung zwei auf einer Längsseite des Grundrahmens 13 angeordnete Auflager 27 genügen. In den Schenkeln 31 der U-förmigen Ausnehmung 29 sind Durchgangsöffnungen 33 vorgesehen, die der Aufnahme eines Verriegelungsbolzens 35 dienen. Der Verriegelungsbolzen 35 ist Teil eines Kolben-/Zylinderaggregats 37, das an einem auf dem Querträger 19 angeordneten Steg 39 festgemacht ist.

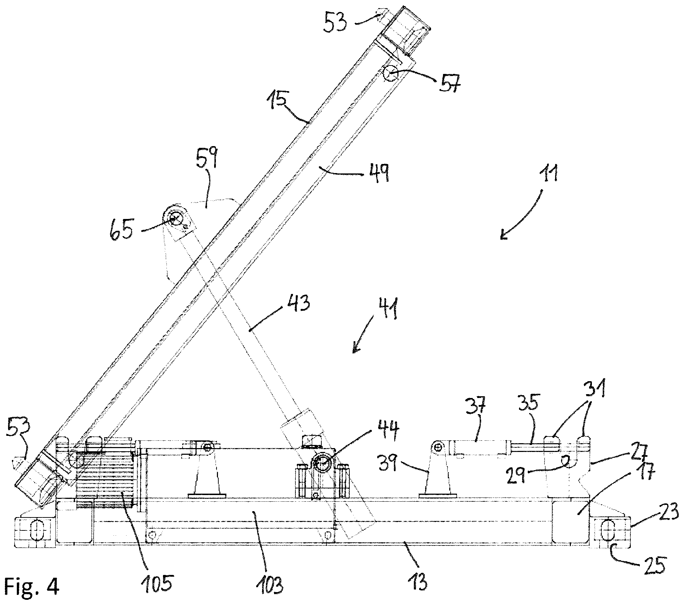

Mittig auf dem Querträger 19 ist je eine Hebevorrichtung 41 angeordnet. Diese ist vorzugsweise eine Hydraulikvorrichtung mit einem teleskopartig ausfahrbaren Kolben 43. Dieser greift mit seinem distalen Ende an einem Gegenlager 45 des Kipprahmens 15 an (Fig. 1 und 4). Der Kolben 43 ist um eine Achse 44 parallel zur Längsrichtung der Kippvorrichtung verschwenkbar, d.h. er ist gelenkig mit dem Kipprahmen verbunden, sodass er sich auf beide Seiten verschwenken kann.

Der im Wesentlichen rechteckförmige Kipprahmen 15 besteht wie der Grundrahmen 13 vorzugsweise aus zwei Längsträgern 47 und zwei Querträgern 49, obwohl auch andere Designs vorstellbar sind, wie z.B. längliche Kippelemente, die quer zur Längsrichtung der Kippvorrichtung verlaufen. An den Ecken des Kipprahmens 15 sind Verbindungszapfen 53 vorgesehen, die durch eine Strebe 51 zusätzlich miteinander verbunden sind. Die Abstände zwischen den Verbindungszapfen 53 entsprechen vorzugsweise denjenigen von genormten ISO-Containern. Damit können auf dem Kipprahmen 15 ISO-Transportcontainer aufgenommen werden.

Vorzugsweise sind an den vier Ecken des Kipprahmens 15 vier Auflagerfüsse 55 vorgesehen. Diese sind gemäss dem gezeigten Ausführungsbeispiel durch Kippwellen 57 realisiert, die zwischen zwei Querstreben 58 am Kipprahmen 15 angeordnet sind. In der Ruheposition der Kippvorrichtung sind die Kippwellen 57 in den U-förmigen Ausnehmungen 29 des Auflagers 27 aufgenommen und durch die Verriegelungsbolzen 35 in dieser Lage gesichert (Fig. 1, Stirnansicht).

Das Gegenlager 45 für den Kolben 3 der Hebevorrichtung 41 ist durch zwei in Abstand voneinander und am Querträger 49 angeordnete Stahlbleche 59 gebildet, in denen zwei Lagerhülsen 61 fluchtend zueinander angeordnet sind. Zwischen die beiden Lagerhülsen kann der Kolben 43, dessen Ende ein Auge 63 für die Aufnahme eines Bolzens 65 aufweist, eingreifen. Gemäss einer bevorzugten Ausführungsform (in den Figuren nicht gezeigt) befindet sich das Gegenlager 45 innerhalb der Aussenkontur der Kippvorrichtung. Damit ist die Kippvorrichtung noch kompakter gebaut und kann alle unterschiedlichen Arten von Containern aufnehmen, auch solche, welche im Bodenbereich keinen Hohlraum haben.

Figur 4 zeigt die erfindungsgemässe Kippvorrichtung in der Arbeitsposition, wo der Kipprahmen 15 gegenüber dem Grundrahmen 13 auf die linke Seite hin gekippt ist. Dazu werden die Verriegelungsbolzen 35 auf der rechten Seite der Kippvorrichtung vorgängig zurückgezogen, sodass sich der Kipprahmen auf dieser Seite vom Auflager 27 abheben kann. In dieser Lage ist der Kolben 43 ganz ausgefahren, und der Kipprahmen ist zwischen ungefähr 45 und 50 Grad gegenüber dem Grundrahmen geneigt.

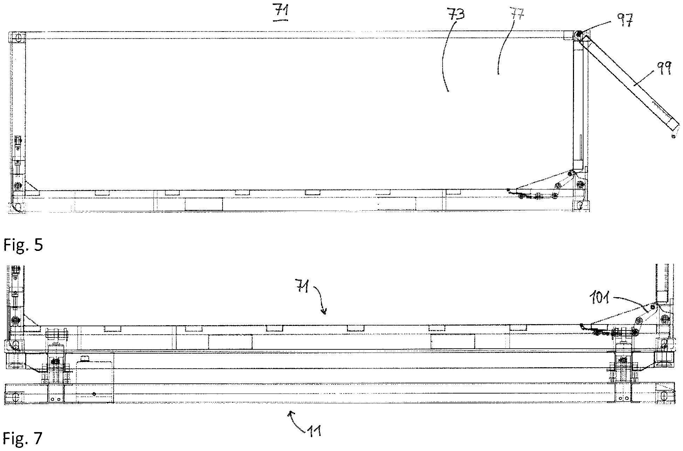

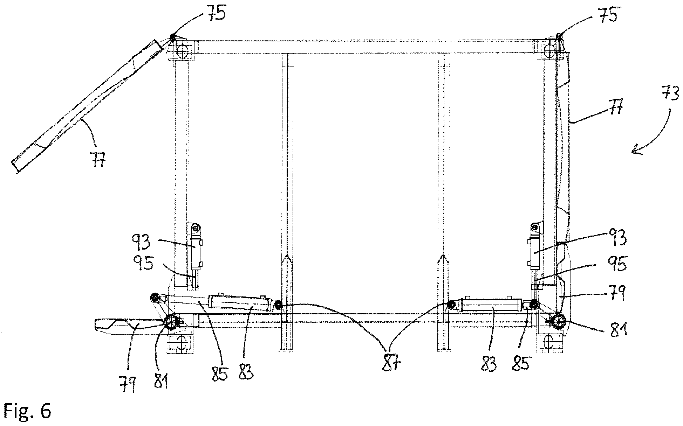

In den Figuren 5 und 6 ist ein modifizierter, oben offener Transportcontainer 71 in Seiten- und in Stirnansicht gezeigt, der sich für den Transport von Schüttgut wie Aushubmaterial, Kies, SandSchlacke, Asche und dergleichen eignet. Der Transportcontainer 71 zeichnet sich dadurch aus, dass die Seitenwände 73 als um eine Achse 75 verschwenkbare Klappen 77 ausgebildet sind. Die Klappen 77 sind durch zwei seitlich angeordnete und um eine Achse 81 verschwenkbare Winkelhebel 79 in der Schliessstellung gehalten, in der die Klappe den Tansportcontainer verschliesst. Betätigt wird der Winkelhebel 79 durch eine erste Schliessvorrichtung bestehend aus einem Hydraulikzylinder 83 und Kolben 85. Der Hydraulikzylinder 83 ist aussen an der Stirnwand 89 des Transportcontainers 71 um eine Achse 87 verschwenkbar an einer Strebe 91 angeordnet. Auf der linken Seite der Figur 5 und auf der rechten Seite der Figur 6 ist jeweils die Offenstellung und jeweils gegenüberliegend der Offenstellung die Schliessstellung gezeigt.

Um ein unbeabsichtigtes Öffnen der Klappe 77 zu verunmöglichen, ist eine zweite Schliessvorrichtung bestehend aus einem weiteren Hydraulikzylinder 93 und einem dazugehörigen Kolben 95 vorgesehen. Die zweite Schliessvorrichtung wirkt derart auf die erste Schliessvorrichtung ein, dass die erste Schliessvorrichtung sich nur dann betätigen lässt, wenn die zweite Schliessvorrichtung vorgängig geöffnet worden ist. Vorliegend ist die zweite Schliessvorrichtung ungefähr senkrecht am Transportcontainer 71 angeordnet und kann ein Verschwenken des Winkelhebels 79 blockieren, wenn dieser sich, wie in der Figur 6 unten rechts gezeigt, in der Schliessstellung befindet. In dieser Stellung ist der Kolben 95 ausgefahren und liegt entweder am kurzen Schenkel des Winkelhebels 79 an oder befindet sich in kurzem Abstand zu diesem.

Wie aus Figur 5 ersichtlich ist, kann zusätzlich zu den Seitenwänden auch die Heckseite des Transportcontainers als eine um eine Schwenkachse 97 verschwenkbare Heckklappe 99 ausgebildet sein. In diesem Fall kann die Heckklappe 99 mittels eines üblichen Ratschenverschlusses 101 verriegelt werden.

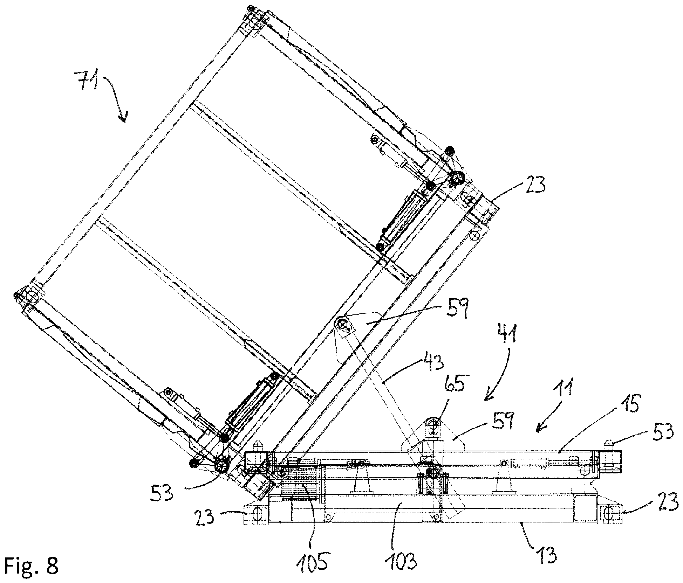

In der Figur 7 ist die Kippvorrichtung 11 und der untere Teil eines auf der Kippvorrichtung angeordneter Transportcontainers 71 in der Ausgangsstellung und in Figur 8 in der Kippstellung gezeigt, wobei in Figur 8 der Kipprahmen in der Ausgangs- und in der Kippstellung gezeigt ist.

Zur Betätigung der verschiedenen Hydraulikaggregate ist auf dem Grundrahmen eine Hydraulikpumpe 103 vorgesehen, die von einem Elektromotor 105 oder einem herkömmlichen Benzinmotor angetrieben ist. Es versteht sich von selbst, dass grundsätzlich auch andere, nicht hydraulische Hebevorrichtungen verwendet werden können, ohne vom Geist der Erfindung abzuweisen. Denkbar ist zudem, dass auf dem Grundrahmen eine Batterie zum Speisen des Elektromotors vorgesehen ist. Damit wäre die Kippvorrichtung völlig autonom.

Eine Kippvorrichtung 11 für Transportcontainer 71 besitzt einen unteren rechteckförmigen Grundrahmen 13 und einen oberen ebenfalls rechteckförmigen Kipprahmen 15, der gelenkig mit dem Grundrahmen verbunden 13 ist. Am Grundrahmen 13 ist eine Hebevorrichtung 41 vorgesehen, die am Kipprahmen 15 angreift und ein Verschwenken des Kipprahmens gegenüber dem Grundrahmen bewirken kann, wenn die eine Längsseite des Kipprahmens am Grundrahmen mittels Verriegelungsvorrichtungen blockiert und die andere Längsseite des Kipprahmens entriegelt ist und nach oben verschwenkbar ist. An den einander gegenüberliegenden Querträgern ist vorne und hinten am Grundrahmen je eine Hebevorrichtung montiert. Am Grundrahmen sind Eckbeschläge 23 einer ersten Art vorgesehen, die mit Eckbeschlägen einer zweiten Art zusammenwirken können, die an einem Transportfahrzeug vorgesehen sind. Am Kipprahmen 15 sind Eckbeschläge 53 einer zweiten Art vorgesehen zum formschlüssigen Zusammenwirken mit den an einem Transportcontainer vorgesehenen Eckbeschlägen 23 einer ersten Art. Erfindungsgemäss ist am Grundrahmen 13 zusätzlich eine Antriebseinheit 103,105 für die Hebevorrichtung vorgesehen ist und die Hebevorrichtung mit dem ausfahrbaren Kolben 43 in der Ruheposition innerhalb der Auflagefläche des Grundrahmens angeordnet ist.

### Legende:

- 11: Kippvorrichtung
- 13: Grundrahmen
- 15: Kipprahmen
- 17: Längsträger
- 19: Querträger
- 21: Auskragungen
- 23: Gehäuse
- 25: Öffnung für Verbindungszapfen
- 27: Auflager
- 29: U-förmige Ausnehmung
- 31: Schenkeln der U-förmigen Ausnehmung
- 33: Durchgangsöffnungen
- 35: Verriegelungsbolzen
- 37: Kolben/Zylinderaggregat
- 39: Steg
- 41: Hebevorrichtung
- 43: Kolben
- 44: Drehachse
- 45: Gegenlager am Kipprahmen
- 47: Längsträger
- 49: Querträger
- 51: Strebe
- 53: Verbindungszapfen
- 55: Auflagerfüsse
- 57: Kippwelle
- 58: Querstreben zwischen den Längsträgern 47
- 59: Stahlbleche
- 61: Lagerhülsen
- 63: Auge des Kolbens 43
- 65: Bolzen
- 71: Transportcontainer
- 73: Seitenwände des Containers
- 75: Achse
- 77: verschwenkbare Klappe
- 79: Winkelhebel
- 81: Achse
- 83: Hydraulikzylinder
- 85: Kolben
- 87: Achse
- 89: Stirnwand
- 91: Strebe
- 93: Hydraulikzylinder
- 95: Kolben
- 97: Schwenkachse
- 99: Heckklappe
- 101: Ratschenverschluss
- 103: Hydraulikpumpe
- 105: Elektromotor

## Patentansprüche

1. Kippvorrichtung (11), die zum seitlichen Kippen von Transportcontainern (71) ausgelegt und zur Verwendung im kombinierten Ladungsverkehr auf Last- und Bahnwagen geeignet ist, mit
- einem unteren Grundrahmen (13),
- einem Kippelement (15), das gelenkig mit dem Grundrahmen (13) verbunden ist,
- einer am Grundrahmen (13) angeordneten Hebevorrichtung (41),
- mit einem ausfahrbaren Kolben (43),
- wobei der Kolben am Kippelement (15) angreift und ein seitliches Verschwenken des Kippelements (15) gegenüber dem Grundrahmen (13) bewirken kann,
**dadurch gekennzeichnet,**
**dass** am Grundrahmen (13) zusätzlich eine Antriebseinheit (103,105) für die Hebevorrichtung vorgesehen ist und die Hebevorrichtung mit dem ausfahrbaren Kolben (43) in der Ruheposition innerhalb der Auflagefläche des Grundrahmens angeordnet ist.

2. Vorrichtung nach Anspruch 1, **dadurch gekennzeichnet, dass** die Hebevorrichtung eine Hydraulikvorrichtung und die Antriebseinheit (103,105) vorzugsweise eine Hydraulikpumpe und ein dem Antrieb der Hydraulikpumpe dienender Motor, insbesondere Elektromotor, umfasst.

3. Vorrichtung nach Anspruch 1 oder 2, **gekennzeichnet durch**
- am Grundrahmen (13) vorgesehene Eckbeschläge (23) einer ersten Art, die mit Eckbeschlägen einer zweiten Art zusammenwirken können, die an einem Transportfahrzeug vorgesehen sind,
- und am Kippelement (15) vorgesehene Eckbeschläge (53) einer zweiten Art zum formschlüssigen Zusammenwirken mit den an einem Transportcontainer vorgesehenen Eckbeschlägen einer ersten Art.

4. Vorrichtung nach einem der Ansprüche 1 bis 3, **dadurch gekennzeichnet, dass** die Kippvorrichtung für die Aufnahme von Transportcontainern (71), vorzugsweise von ISO-Containern, ausgelegt ist, die bodenseitig Eckbeschläge der ersten Art und deckenseitig Eckbeschläge der zweiten Art aufweisen, wobei die Eckbeschläge der ersten und zweiten Art zweier Transportcontainer formschlüssig miteinander zusammenwirken können, um die Container übereinander stapeln zu können.

5. Vorrichtung nach einem der Ansprüche 1 bis 4, **dadurch gekennzeichnet, dass** am Grundrahmen (13) mehrere Auflager (27) und am Kippelement (15) mehrere mit den Auflagern (27) zusammenwirkende Auflagerfüsse (55) vorgesehen sind, wobei für jedes Auflager (27) je eine Verriegelungsvorrichtung vorgesehen ist, die ausgelegt ist, um den auf dem Auflager (27) aufliegenden Auflagerfuss (55) des Kipprahmens (15) zu blockieren oder freizugeben.

6. Vorrichtung nach Anspruch 5, **dadurch gekennzeichnet, dass** an den vier Ecken des Grundrahmes vier Auflager und an den vier Ecken des Kipprahmens (15) vier Auflagerfüsse (55) vorgesehen sind.

7. Vorrichtung nach Anspruch 5 oder 6, **dadurch gekennzeichnet, dass** das Auflager (27) eine nach oben offene U-förmige Ausnehmung für die Aufnahme des Auflagerfusses (55) hat.

8. Vorrichtung nach einem der Anspruch 5 bis 7, **dadurch gekennzeichnet, dass** der Auflagerfuss (55) durch eine Kippwelle (57) gebildet ist, die im Ruhe- resp. Ausgangszustand in der U-förmigen Ausnehmung (29) des Auflagers (27) aufgenommen ist.

9. Vorrichtung nach Anspruch 8, **dadurch gekennzeichnet, dass** die Verriegelungsvorrichtung ein Kolben/Zylinderaggregat (37) umfasst, das an einem Steg (39) angeordnet ist und dessen Kolben (35) in Öffnungen, die in den Schenkeln (31) der U-förmigen Ausnehmung (29) vorgesehen sind, eingreifen kann.

10. Vorrichtung nach einem der Anspruch 1 bis 9, **dadurch gekennzeichnet, dass** am Grundrahmen (13) eine Hydraulikpumpe (103) und ein dem Antrieb der Hydraulikpumpe (103) dienender Motor, insbesondere Elektromotor (105), für den Betrieb der Hebevorrichtung vorgesehen sind.

11. Vorrichtung nach einem der Anspruch 1 bis 10 **dadurch gekennzeichnet, dass** der Grundrahmen (13) durch zwei Längs- (17) und zwei Querträger (19) gebildet ist.

12. Vorrichtung nach einem der Anspruch 1 bis 11, **dadurch gekennzeichnet, dass** je eine Hebevorrichtung (41) auf einem Querträger (19) angeordnet ist.

13. Vorrichtung nach einem der Anspruch 1 bis 12, **gekennzeichnet durch**
- am Grundrahmen (13) vorgesehenen Eckbeschläge (23) einer ersten Art, die mit Eckbeschlägen einer zweiten Art zusammenwirken können, die an einem Transportfahrzeug vorgesehen sind,
- und am Kippelement (15) vorgesehenen Eckbeschläge (53) einer zweiten Art zum formschlüssigen Zusammenwirken mit den an einem Transportcontainer vorgesehenen Eckbeschlägen einer ersten Art.

14. Transportsystem mit einer Kippvorrichtung (11) gemäss einem der Ansprüche 1 bis 13 und einem Transportcontainer (71) für den Transport von Schüttgut wie Aushubmaterial, Kies, SandSchlacke, Asche und dergleichen, mit
- einem Bodenteil, und
- vier Wänden, nämlich zwei Seitenwänden (73) und zwei Stirnwänden,
- wobei eine Seitenwand als eine um eine Schwenkachse verschwenkbare Klappe ausgebildet ist, die an den Ecken gegenüberliegend der Schwenkachse mittels mindestens einer ersten Verriegelungsvorrichtung (83,85) in der Geschlossenstellung blockierbar ist.

15. Transportcontainer nach Anspruch 14, **dadurch gekennzeichnet, dass** beide Seitenwände (73) und vorzugsweise mindestens eine der Stirnwände als verschwenkbare Klappen ausgebildet sind.
